# EUROPÄISCHE PATENTSCHRIFT

(11) **EP 3 233 548 B1**
(45) Veröffentlichungstag und Bekanntmachung des Hinweises auf die Patenterteilung: **20.03.2019**
(21) Anmeldenummer: 15793810.1
(22) Anmeldetag: 11.11.2015
(51) Int. Cl.: B60J 1/20

(54) **SCHUTZVORRICHTUNG FÜR EINEN FAHRZEUGINNENRAUM**
PROTECTION DEVICE FOR A VEHICLE INTERIOR
DISPOSITIF DE PROTECTION DESTINÉ À L'HABITACLE D'UN VÉHICULE

(30) Priorität: 15.12.2014 DE 102014225895
(43) Veröffentlichungstag der Anmeldung: 25.10.2017
(73) Patentinhaber: BOS GmbH & Co. KG, 73760 Ostfildern (DE)
(72) Erfinder: WALTER, Herbert, 73061 Ebersbach (DE); TRAN, Huan, 73760 Ostfildern (DE); MAIER, Matthias, 73733 Esslingen (DE)
(74) Vertreter: Patentanwälte Ruff, Wilhelm, Beier, Dauster & Partner mbB
(86) Internationale Anmeldenummer: PCT/EP2015/076294
(87) Internationale Veröffentlichungsnummer: WO 2016/096252

(56) Entgegenhaltungen:
- DE-A1-102004 046 783
- US-A- 5 404 926
- US-A1- 2005 061 454
- US-A1- 2010 013 261

## Beschreibung

Die Erfindung betrifft eine Schutzvorrichtung für einen Fahrzeuginnenraum mit einem flexiblen Flächengebilde, das zwischen einer ausgezogenen Schutzposition und einer Ruheposition verlagerbar ist, wobei das Flächengebilde an seinem in Auszugrichtung vorderen Stirnendbereich mit einem formstabilen Auszugprofil verbunden ist, das an seinen gegenüberliegenden Seiten an jeweils einer Führungsstruktur, die in betriebsfertigem Zustand fahrzeugfest angeordnet ist, längsverfahrbar gelagert ist.

Eine derartige Schutzvorrichtung in Form einer Beschattungsvorrichtung für eine Heckscheibe eines Personenkraftwagens ist aus der EP 1 215 063 A1 bekannt. Die bekannte Beschattungsvorrichtung weist ein flexibles Flächengebilde auf, das auf einer Rollowelle auf- und abwickelbar gehalten ist. Die Rollowelle ist unterhalb einer Hutablage des Fahrzeuginnenraums innenraumfest angeordnet und drehbar gelagert. Das flexible Flächengebilde ist durch einen Durchtrittsschlitz in der Hutablage hindurch nach oben ausziehbar und weist an seinem in Auszugrichtung vorderen Stirnendbereich ein formstabiles Auszugprofil auf, das in innenraumseitig festgelegten seitlichen Führungsschienen längsverlagerbar geführt ist. Hierzu ist das Auszugprofil an seinen gegenüberliegenden Stirnenden mit jeweils einem Gleitstein verbunden, der in der jeweiligen Führungsschiene längsverfahrbar gelagert ist. Jeder Gleitstein ist mit einem Antriebsübertragungsmittel in Form einer Flexwelle verbunden, die ebenfalls in der Führungsschiene verläuft. Die beiden Flexwellen in den gegenüberliegenden Führungsschienen werden durch einen Elektromotor synchronisiert angetrieben, um eine Parallelverlagerung des Auszugprofils zwischen einer Ruheposition des Flächengebildes und einer ausgezogenen Schutzposition des Flächengebildes zu erzielen. Die US2005061454 zeigt eine Schutzvorrichtung nach dem Oberbegriff des Anspruchs 1.

Aufgabe der Erfindung ist es, eine Schutzvorrichtung der eingangs genannten Art zu schaffen, die eine reibungsarme Verlagerung des Auszugprofils in den Führungsstrukturen ermöglicht.

Diese Aufgabe wird dadurch gelöst, dass in jeder Führungsstruktur jeweils ein Seilzug verlegt ist, der an jeweils einem in der Führungsstruktur gleitbeweglich gelagerten Gleitkörper angreift, der derart mit dem Auszugprofil verbunden ist, dass ein durch einen Angriffspunkt des Seilzugs am Gleitkörper in das Auszugprofil eingeleitetes Drehmoment und ein durch das Flächengebilde in das Auszugprofil eingeleitetes Gegendrehmoment relativ zu einer quer zur Auszugrichtung verlaufenden Längsachse des Auszugprofils derart gestaltet sind, dass die Gleitkörper und das Auszugprofil bei einer Verlagerungsbewegung im Gleichgewicht gehalten werden. Der jeweilige Seilzug ist in der jeweiligen Führungsstruktur reibungsarm verlegt, so dass eine Bewegung des Seilzugs ohne große Reibungskräfte zwischen der Führungsstruktur und dem jeweiligen Seilzug erfolgt. Um zu vermeiden, dass das an dem Auszugprofil angreifende Flächengebilde auf den jeweiligen Gleitkörper innerhalb der jeweiligen Führungsstruktur ein Kippmoment ausübt, das eine Reibung des Gleitkörpers in einer entsprechenden Führungsspur der jeweiligen Führungsstruktur erhöht, ist erfindungsgemäß vorgesehen, dass der Seilzug am Gleitkörper so angreift, dass dieses durch die Zugbelastung des Flächengebildes in das Auszugprofil und damit in den Gleitkörper eingeleitete Drehmoment ausgeglichen wird. Dabei muss keine vollständige Neutralisierung der Drehmomente erfolgen. Der Ausgleich der gegensinnigen Drehmomente soll lediglich so gestaltet sein, dass ein Verkanten des Gleitkörpers innerhalb der Führungsstruktur, das zu erhöhter Reibung zwischen Gleitkörper und Führungsstruktur bei einer Längsverlagerung des Gleitkörpers führt, vermieden wird. Die erfindungsgemäße Lösung eignet sich in besonders vorteilhafter Weise für den Einsatz der Schutzvorrichtung als Beschattungsvorrichtung für eine Heckscheibe eines Personenkraftwagens. In gleicher Weise kann die Schutzvorrichtung auch zur Beschattung von Seitenscheiben oder zur Beschattung von transparenten Dachbereichen des Fahrzeuginnenraums vorgesehen sein. Die erfindungsgemäße Lösung ist auch für Laderaumabdeckungen oder Laderaumabtrennungen vorgesehen, um durch ein entsprechendes flexibles Flächengebilde einen Laderaum gegen Blicke von außen abzudecken oder um einen Fahrgastraum von dem Laderaum etwa vertikal abzutrennen.

In Ausgestaltung der Erfindung weist der Seilzug ein offenes Seil auf, das an einem Ende mit dem Gleitkörper und an einem gegenüberliegenden Ende mit einer drehbaren Seiltrommel verbunden ist. Durch die Gestaltung des Seilzugs als offenes Seil ist in besonders einfacher Weise ein Angriff des Seilendes des Seils am Gleitkörper außermittig, d.h. exzentrisch, zu einer imaginären Kippachse ermöglicht.

In weiterer Ausgestaltung der Erfindung ist jedem Seilzug eine Seillängenkompensationseinheit zugeordnet. Die Seillängenkompensationseinheit kann durch eine Drehfeder im Bereich der Seiltrommel vorgesehen sein, um für die Seiltrommel eine permanente Vorspannung zu erzielen, die den Seilzug unabhängig von einer Seillängung oder einer auf der Seiltrommel auf- oder abgewickelten Seillänge bzw. Seilumschlingung unter Zug hält. Anstelle einer Drehfeder kann auch eine Zug- oder Druckfeder zur Seillängenkompensation vorgesehen sein. Alternativ ist es möglich, das Seil des Seilzugs in einem Bowdenzug zu verlegen, der gekrümmt ist und demzufolge entsprechende Seillängenunterschiede oder Zugkraftänderungen des Seilzugs ausgleicht.

In weiterer Ausgestaltung der Erfindung ist jede Führungsstruktur an ihrem von der Seiltrommel abgelegenen Endbereich mit einer Umlenkführung versehen, die als kreisbogenförmige Gleitführung für das Seil gestaltet ist. Die kreisbogenförmige Gleitführung ist besonders einfach herstellbar. Überraschenderweise hat sich die Kreisbogenform der Gleitführung als besonders geeignet herausgestellt, um das Seil reibungsarm umzulenken.

In weiterer Ausgestaltung der Erfindung ist das Seil längs der Führungsstruktur über mehrere Querspannstützen geführt, die eine kombinierte Führung und Querspannung des Seils relativ zu seiner Laufrichtung bewirken. Dadurch wird bei dem Seil in längs der Führungsstruktur verlegtem und betriebsfertigem, unter Zugbelastung stehendem Zustand ein sogenannter Gitarrensaiteneffekt vermieden, d.h. es werden Längsschwingungen des Seils im Betrieb des Seilzugs vermieden. Durch die Querspannstützen ist gewährleistet, dass das Seil in den vorgegebenen Führungsbahnen innerhalb der Führungsstruktur verbleibt, ohne zu verhaken oder zu verklemmen.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform einer erfindungsgemäßen Schutzvorrichtung in Form einer Beschattungsvorrichtung für eine Heckscheibe eines Personenkraftwagens,
- Fig. 2: in einer Explosionsdarstellung eine linke Seite der Beschattungsvorrichtung nach Fig. 1,
- Fig. 3: in einer Explosionsdarstellung eine rechte Seite der Beschattungsvorrichtung nach Fig. 1,
- Fig. 4: eine antriebsseitige Führungsstruktur der Beschattungsvorrichtung nach Fig. 1,
- Fig. 5: in vergrößerter perspektivischer Darstellung einen Ausschnitt einer Antriebsseite der Beschattungsvorrichtung nach den Fig. 1 bis 4,
- Fig. 6: in weiter vergrößerter perspektivischer Darstellung ein Antriebssystem der Beschattungsvorrichtung nach den Fig. 1 bis 5 unter Weglassung der antriebsseitigen Führungsstruktur,
- Fig. 7: in perspektivischer Darstellung einen Teilbereich der Führungsstruktur für die Beschattungsvorrichtung nach den Fig. 1 bis 5,
- Fig. 8: einen weiteren Teilbereich der Führungsstruktur für die Beschattungsvorrichtung nach den Fig. 1 bis 7 im Bereich einer Seilumlenkung,
- Fig. 9: in perspektivischer Darstellung einen Teilbereich der Beschattungsvorrichtung gemäß den Fig. 1 bis 8 im Bereich eines das Auszugprofil führenden Gleitkörpers und
- Fig. 10: in vergrößerter Darstellung den Gleitkörper nach Fig. 9 in einer Perspektive von unten im Bereich eines Angriffspunkts eines Seilendes des Seilzugs.

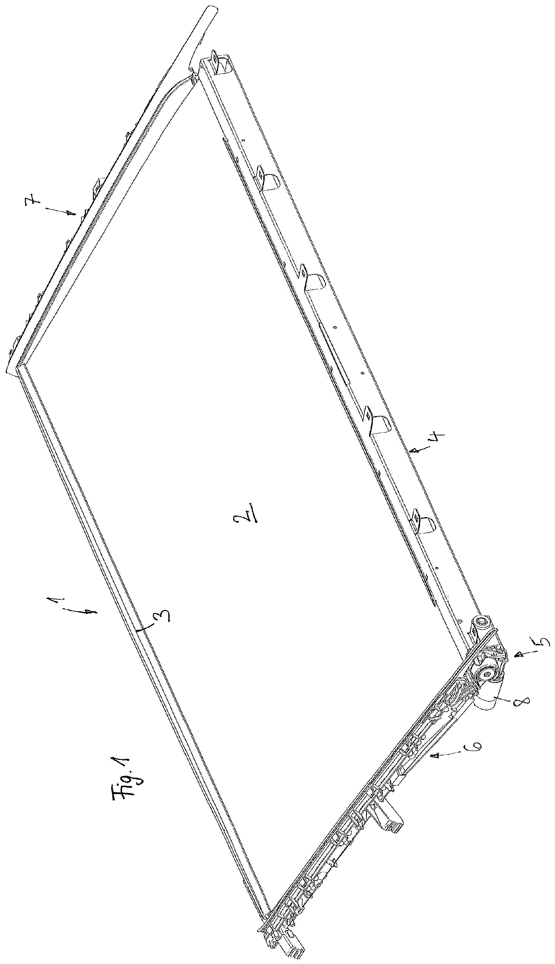

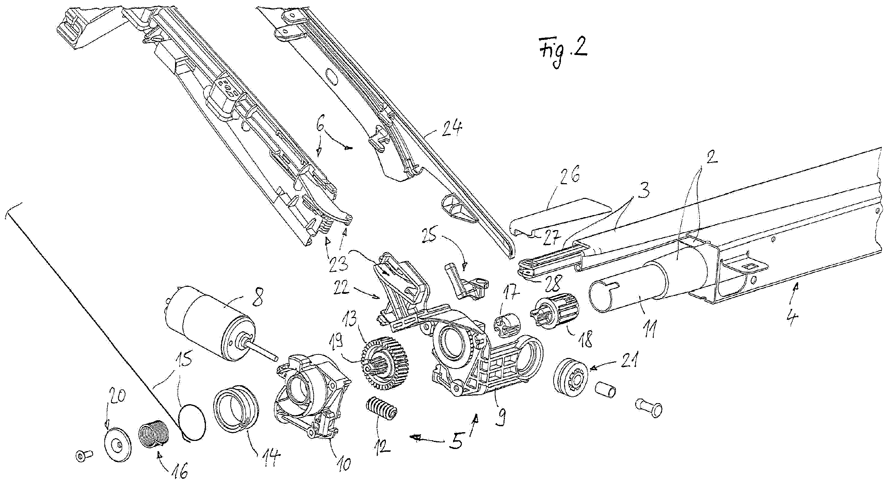

Eine Schutzvorrichtung in Form einer Beschattungsvorrichtung 1 gemäß den Fig. 1 bis 10 ist zur Beschattung einer Heckscheibe eines Personenkraftwagens vorgesehen. Die Beschattungsvorrichtung 1 weist ein flexibles Flächengebilde 2, vorliegend in Form eines textilen Gewirkes oder Gewebes, auf, das auf einer Rollowelle 11 zwischen einer in Fig. 1 gezeigten, ausgezogenen Schutzposition und einer in Fig. 2 gezeigten, aufgewickelten Ruheposition auf- und abwickelbar gehalten ist. Die Rollowelle 11 ist als zylindrisches Hohlprofil gestaltet. Das Flächengebilde 2 und die Wickelwelle 11 werden über einen Großteil ihrer in Längsrichtung der Rollowelle 11 gesehenen Längserstreckung von einem formstabilen, kassettenförmigen Aufnahmeprofil 4 umgeben.

In einem fahrzeugseitig montierten, betriebsfertigen Funktionszustand ist die Rollowelle unterhalb einer nicht dargestellten Hutablage angeordnet, die im Fahrzeuginnenraum unterhalb der Heckscheibe des Personenkraftwagens positioniert ist. In der Hutablage ist ein Durchtrittsschlitz vorgesehen, durch den hindurch das flexible Flächengebilde 2 sich erstreckt.

Das flexible Flächengebilde 2 ist an seinem in Auszugrichtung vorderen Stirnendbereich mit einem formstabilen Auszugprofil 3 verbunden.

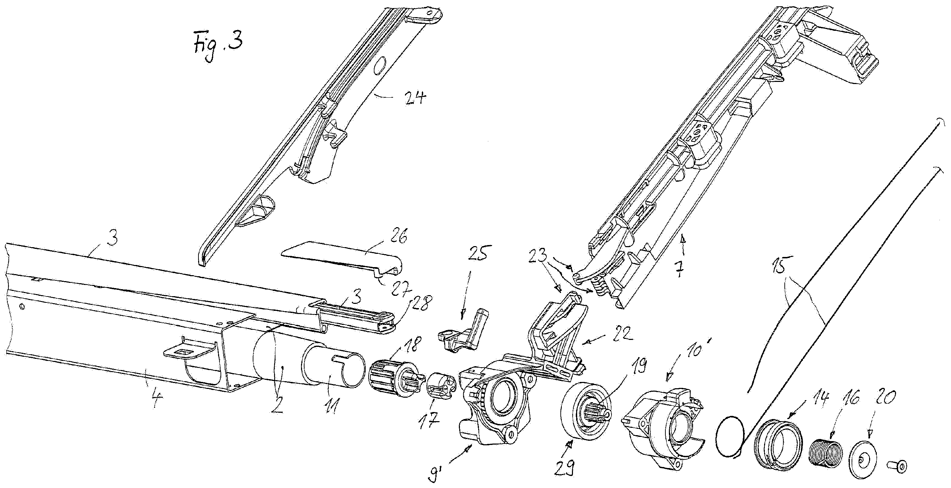

Wie anhand der Fig. 2 und 3 erkennbar ist, ist hierzu das Flächengebilde 2 an seinem vorderen Stirnendbereich mit einem Keder versehen, der längs des Auszugprofils 3 in eine komplementäre Kedernut des Auszugprofils 3 eingezogen ist. Das Auszugprofil 3 liegt in aufgewickelter Ruhestellung des Flächengebildes 2 im Bereich einer Oberseite eines Rands des Durchtrittsschlitzes auf der Hutablage auf und verdeckt den Durchtrittsschlitz.

Wie anhand der Fig. 1 bis 3 erkennbar ist, ist die Rollowelle 11 an ihren gegenüberliegenden Stirnenden in zwei Gehäuseanordnungen 5, 9, 10; 9', 10' in nachfolgend näher beschriebener Weise gelagert, wobei die in der Zeichnung nach Fig. 1 linke Gehäuseanordnung 5 eine antriebsseitige Gehäuseanordnung und die in Fig. 3 dargestellte, rechte Gehäuseanordnung 9', 10' eine abtriebsseitige Gehäuseanordnung darstellen. Die beiden Gehäuseanordnungen 5, 9, 10; 9', 10' sind jeweils stirnseitig mit dem kassettenförmigen Aufnahmeprofil 4 verbunden. Hierzu weisen Gehäuseschalenteile 9, 9' der Gehäuseanordnungen nicht näher bezeichnete Steckprofilierungen auf, die passgenau auf die jeweilige offene Stirnseite des kassettenförmigen Aufnahmeprofils 4 steckbar sind. Zusätzlich sind nicht näher dargestellte mechanische Befestigungselemente wie Schraub- oder Nietverbindungen vorgesehen, um den jeweiligen Gehäuseschalenteil 9, 9' in dem aufgesteckten Zustand am Aufnahmeprofil 4 zu sichern.

Die beiden Gehäuseanordnungen 5, 9, 10; 9', 10' sind aus Kunststoff hergestellt und weisen einstückig angeformte Lager- und Aufnahmeabschnitte für weitere Funktionsteile auf, die nachfolgend näher beschrieben werden.

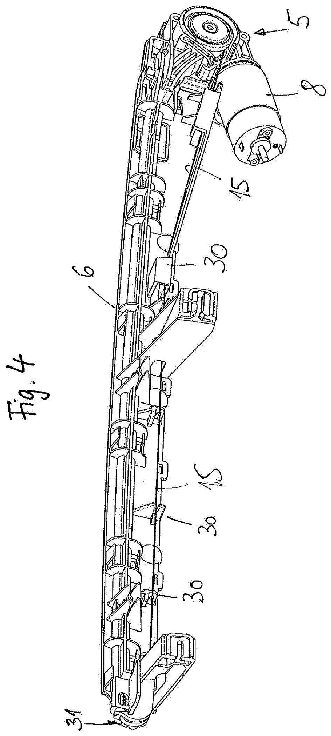

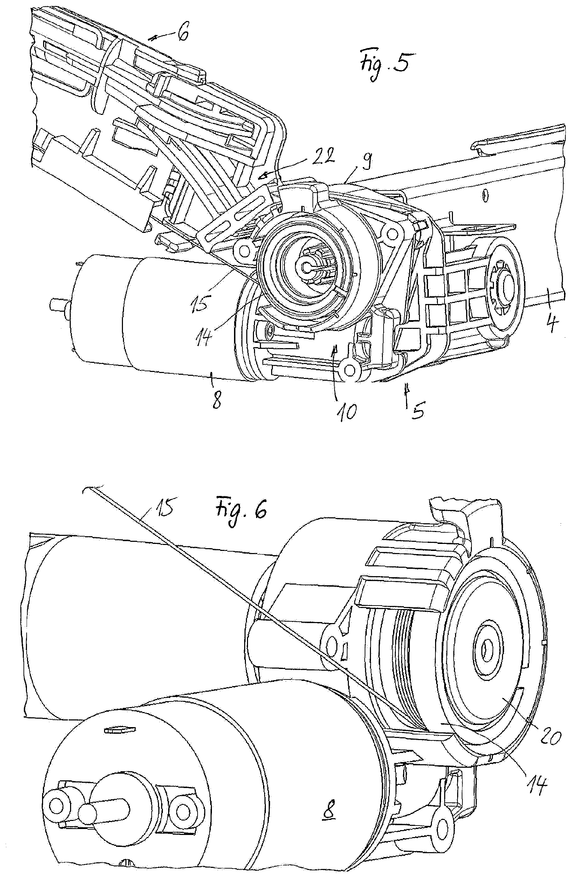

Die antriebsseitige Gehäuseanordnung 5 weist neben dem Gehäuseschalenteil 9, der mit dem Aufnahmeprofil 4 verbunden wird, einen Gehäuseabschnitt 10 auf, der mithilfe von Schraubverbindungen oder ähnlichen mechanischen Befestigungsmitteln mit dem Gehäuseschalenteil 9 zusammenfügbar ist. Der Gehäuseabschnitt 10 weist eine nicht näher bezeichnete Halteaufnahme zur Befestigung eines Elektromotors 8 auf, der in nachfolgend näher beschriebener Weise die Rollowelle 11 antreibt. Auf einer Antriebswelle des Elektromotors 8 ist ein Schneckenrad 12 befestigt, das mit einem Zahnrad 13 kämmt, das koaxial zu einer Drehachse der Rollowelle 11 angeordnet und drehschlüssig mit der Rollowelle 11 verbunden ist. Das Zahnrad 13 ist als Stirnzahnrad ausgeführt. Der Elektromotor 8 ist quer zur Drehachse der Rollowelle 11 an dem Gehäuseabschnitt 10 befestigt. Das Schneckenrad 12 ist, wie anhand der Fig. 4 und 5 erkennbar ist, unterhalb des Zahnrads 13 kämmend zu dem Zahnrad 13 positioniert.

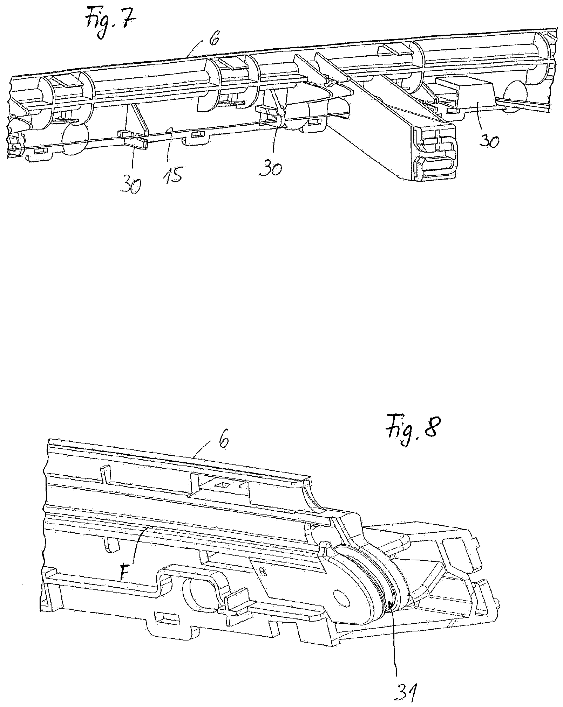

Eine Drehmomentübertragung zwischen dem Elektromotor 8 und der Rollowelle 11 erfolgt von dem Zahnrad 13 über eine elastische Steckkupplung 17, 18, die anhand der Fig. 4 und 6 gut erkennbar ist. Die elastische Steckkupplung weist ein elastisches Kupplungsglied 17 auf, das als einteiliger Elastomerkörper mit entsprechenden, axial offenen Steckprofilierungen sowohl zum Zahnrad 13 hin als auch zu einem stirnseitigen Abschlusskörper 18 hin versehen ist. Der stirnseitige Abschlusskörper 18 bildet einen stirnseitigen Deckel oder Verschluss für die Rollowelle 11 und weist komplementäre, stirnseitig axial nach außen ragende Steckprofilierungen auf, die drehschlüssig in die Steckprofilierungen des elastischen Kupplungsglieds 17 eintauchen. Das Zahnrad 13 weist, wie anhand der Fig. 6 erkennbar ist, nicht näher bezeichnete, zur Rollowelle 11 hin axial erstreckte Steckprofilierungen auf, die klauenartig in die als Axialaussparungen gestalteten Steckprofilierungen des elastischen Kupplungsglieds 17 eintauchen. Das Zahnrad 13 ist zudem mit einem zylindrischen Ringflansch versehen, auf dessen Innenseite die axialen Steckprofilierungen vorgesehen sind. Der Ringflansch nimmt das Kupplungsglied 17 axial auf, wie Fig. 7 zu entnehmen ist. Die Verbindung zwischen dem Zahnrad 13, dem Kupplungsglied 17 und dem stirnseitigen Abschlusskörper 18 erfolgt durch ein einfaches axiales Zusammenstecken dieser Funktionsteile. Das Zahnrad 13 ist drehbar in einer nicht näher bezeichneten Lageraufnahme der Gehäuseanordnung 5, 9, 10 gelagert.

Die Gehäuseanordnung 5, 9, 10 wird mithilfe von Schwingungsdämpfungselementen 21, von denen in Fig. 2 lediglich eines dargestellt ist, an dem Aufnahmeprofil 4 befestigt.

Der Elektromotor 8 treibt über die Drehmomentübertragungsmittel in Form des Schneckenrads 12, des Zahnrads 13, der axialen Steckprofilierungen, des elastischen Kupplungsglieds 17 und des stirnseitigen Abschlusskörpers 18 die Rollowelle 11 um ihre Drehachse in beiden Drehrichtungen an.

An einem gegenüberliegenden Stirnende ist die Rollowelle 11 mit weiteren Drehmomentübertragungsmitteln versehen, die spiegelsymmetrisch ebenfalls durch eine elastische Steckkupplung mit einem stirnseitigen Abschlusskörper 18, einem elastischen Kupplungsglied 17 sowie nicht näher dargestellten axialen Steckprofilierungen einer Trägerscheibe 29 gebildet sind. Alle Funktionsteile oder Abschnitte dieser gegenüberliegenden Abtriebsseite der Rollowelle 11, die mit gleichen Bezugszeichen versehen sind, sind identisch gestaltet zu den entsprechenden Funktionsteilen der zuvor beschriebenen Antriebsseite gemäß Fig. 2. Zur Vermeidung von Wiederholungen wird ergänzend daher auf die Offenbarungen zu den antriebsseitigen Funktionsteilen verwiesen.

Wie anhand der Fig. 3 und 8 erkennbar ist, ist die Rollowelle 11 abtriebsseitig lediglich aus dem Grund drehschlüssig mit der Trägerscheibe 29 gekoppelt, dass ein Antrieb eines Seilzugsystems dieser Abtriebsseite gewährleistet ist. Ein identisches Seilzugsystem ist auch der Antriebsseite zugeordnet und wird nachfolgend näher beschrieben. Die Trägerscheibe 29 ist zwischen dem Gehäuseschalenteil 9' und dem Gehäuseabschnitt 10' drehbar gelagert, wobei der Gehäuseabschnitt 10' mithilfe von Schraubverbindungen oder ähnlichen mechanischen Befestigungsmitteln mit dem Gehäuseschalenteil 9' verbunden wird.

Sowohl der Gehäuseabschnitt 10 als auch der Gehäuseabschnitt 10' weisen eine relativ zur Rollowelle 11 axial nach außen abragende zylindrische Ringschulter auf, auf der jeweils eine Seiltrommel 14 drehbar gelagert ist. Zudem weist jeder Gehäuseabschnitt eine die Seiltrommel 14 über einen Großteil ihres Umfangs radial außen umschließende, zylinderabschnittförmige Abdeckblende auf, die die Seiltrommel 14 radial außen in Umfangsrichtung umschließt. Zwischen der Abdeckblende und der innenseitigen Ringschulter ergibt sich demzufolge ein Ringraum 30 (Fig. 4), in dem die Seiltrommel 14 drehbar gelagert ist. Die jeweilige Seiltrommel 14 ist in der jeweiligen Gehäuseanordnung 5, 9, 10; 9', 10' frei drehbar gelagert. Eine Kopplung der jeweiligen Seiltrommel 14 mit der Rollowelle 11 erfolgt über eine Zwischenschaltung einer als Seillängenkompensationseinheit dienenden Drehfeder 16, die als schraubenförmige Schenkelfeder ausgeführt ist. Ein Schenkelende der Drehfeder 16 ist drehschlüssig mit der Seiltrommel 14 verbunden. Ein gegenüberliegendes Schenkelende der schraubenförmigen Drehfeder 16 ist drehschlüssig mit einem Trägerring 19 des Zahnrads 13 bzw. der Trägerscheibe 29 verbunden. Der jeweilige Trägerring 19 ist einstückig am Zahnrad 13 bzw. an der Trägerscheibe 29 angeformt. Mittels einer Axialsicherungsscheibe 20 und einer nicht näher bezeichneten Schraube wird die jeweilige Drehfeder 16 auf dem Trägerring 19 des Zahnrads 13 bzw. der Trägerscheibe 29 axial fixiert.

Auf jeder Seiltrommel 14 ist jeweils ein Seilende jeweils eines offenen Seils 15 gehalten. Das Seilende ist an einer entsprechenden Halterung auf einem Außenumfang der jeweiligen Seiltrommel 14 fixiert, so dass das Seil sich in einem Betrieb der Beschattungsvorrichtung nicht von der Seiltrommel 14 lösen kann.

Jeder Gehäuseschalenteil 9, 9' weist einen einstückig angeformten Ansatz 22 zur schwenkbaren Halterung einer Führungsstruktur 6, 7 auf. Die Führungsstrukturen 6 und 7 sind in betriebsfertig montiertem Zustand der Beschattungsvorrichtung 1, 1a fahrzeugseitig befestigt. Die fahrzeugseitige Befestigung erfolgt entlang von C-Säulenabschnitten einer Karosserietragstruktur des Personenkraftwagens. Jede Führungsstruktur 6, 7 ist zweiteilig gestaltet und weist jeweils ein relativ zu einer Mitte des Fahrzeuginnenraums gesehen außenseitiges Funktionsprofil sowie eine innenseitige Verkleidungsblende 24 auf, die an entsprechende Verkleidungsteile des Fahrzeuginnenraums angepasst ist. Die Verkleidungsblende 24 und das Funktionsprofil werden nach fertiggestellter, fahrzeugseitiger Montage des jeweiligen Funktionsprofils zusammengefügt. Die beiden Funktionsprofile der gegenüberliegenden seitlichen Führungsstrukturen 6, 7 sind spiegelsymmetrisch zueinander, im Übrigen jedoch identisch zueinander gestaltet. Jedes Funktionsprofil wird über jeweils eine Scharnieranordnung 23 mit dem Ansatz 22 des Gehäuseschalenteils 9 schwenkbeweglich verbunden. Die Scharnieranordnung 23 umfasst Scharnierprofilierungen sowie Führungs- und Wegbegrenzungsmittel, die jeweils einstückig an dem Funktionsprofil oder dem Ansatz 22 angeformt sind. Die Funktionsprofile sind - wie die Gehäuseschalenteile 9 - jeweils aus einem thermoplastischen Kunststoff als einstückige Bauteile hergestellt.

Die beiden Führungsstrukturen 6, 7 dienen zur Längsverlagerung des Auszugprofils 3. Hierzu ist das Auszugprofil 3 an seinen gegenüberliegenden Stirnenden jeweils mit einer Aufnahme 28 zur Halterung eines Gleitkörpers 25 versehen. Das Auszugprofil 3 ist teleskopierbar gestaltet, so dass die Halteaufnahmen 28 an Seitenteilen des Auszugprofils 3 vorgesehen sind, die relativ zu einem formstabilen Mittelteil des Auszugprofils 3 in Fahrzeugquerrichtung und damit quer zu einer Auszugrichtung des Flächengebildes 2 längsverschiebbar sind, so dass das Auszugprofil 3 teleskopierbar ist. Der Gleitkörper 25 weist ein in Fig. 2 und 3 nicht näher bezeichnetes Aufnahmeauge auf, das in die Halteaufnahme 28 eingeführt wird. Die Fixierung des Gleitkörpers 25 an dem Stirnende des Auszugprofils 3 erfolgt durch einen Steckbolzen 27 eines Abdeckteils 26 des Auszugprofils 3, der in montiertem Zustand das Aufnahmeauge durchdringt.

Der Gleitkörper 25 umfasst einen längserstreckten Gleitstein, der in einer nicht näher bezeichneten, als Führungsspur dienenden Führungsnut des jeweiligen Funktionsprofils beider Führungsstrukturen 6, 7 längsverschiebbar geführt ist. In dem jeweiligen Funktionsprofil ist das Seil 15 des Seilzugs in einer eigenen Führungsspur geführt, an einem von dem Ansatz 22 und der Scharnieranordnung 23 abliegenden Stirnendbereich des jeweiligen Funktionsprofils um 180° umgelenkt und durch die Führungsnut für den Gleitkörper 25 bis hin zu dem Gleitstein des Gleitkörpers 25 geführt. An dem Gleitstein des Gleitkörpers 25 ist ein freies Seilende des Seils 15 befestigt. Diese Beschreibung gilt sowohl für die Antriebsseite als auch für die Abtriebsseite. Somit wird insgesamt ein geschlossenes Antriebssystem gebildet.

Eine Schwenkbeweglichkeit des Funktionsprofils relativ zu dem Ansatz 22 und dem jeweiligen Gehäuseschalenteil 9, 9' ist nur vor und während einer Montage der Beschattungsvorrichtung im Personenkraftwagen gegeben. Nach der fahrzeugfesten Montage des jeweiligen Funktionsprofils an den fahrzeugseitigen Karosserietragstrukturbereichen, insbesondere im Bereich von C-Säulenabschnitten, ist das jeweilige Funktionsprofil fahrzeugfest fixiert, so dass keine Schwenkbeweglichkeit mehr gegeben ist. Nach funktionsfertiger Montage der Beschattungsvorrichtung 1 im Fahrzeuginnenraum bewirkt ein Antrieb des Elektromotors 8 eine Drehung der Rollowelle 11 und eine gleichzeitige und synchrone Drehung beider Seiltrommeln 14 der antriebs- und abtriebsseitigen Seilzüge, wodurch die Gleitkörper 25 synchron zueinander längs der Führungsnuten der gegenüberliegenden Funktionsprofile verfahren werden. Dadurch kann das Auszugprofil 3 je nach Bedarf zwischen der aufgewickelten Ruheposition des Flächengebildes 2 und der ausgezogenen Schutzposition des Flächengebildes 2 verlagert werden. Die Drehfedern 16 in den gegenüberliegenden Seiten des Antriebssystems gleichen unterschiedliche Seilspannungen oder unterschiedliche Spannungen des Flächengebildes 2 aus, so dass sich ein geschlossenes und selbstjustierendes Antriebssystem ergibt. Der Elektromotor 8 kann mit sehr geringer Leistung ausgelegt werden, da aufgrund des Fehlens einer Wickelfeder, die der Rollowelle 11 zugeordnet wäre, keine großen Antriebskräfte benötigt werden. Zudem werden etwa gleich große Antriebskräfte für ein Ausfahren des Auszugprofils 3 aus der Ruheposition in die Schutzposition und für ein Zurückfahren des Auszugprofils 3 aus der Schutzposition in die Ruheposition benötigt.

Beide Führungsstrukturen 6 und 7 sind jeweils zweiteilig gestaltet aus einem Funktionsprofil, das nicht näher bezeichnet ist, und aus einer Verkleidungsblende 24, die in montiertem Funktionszustand der Beschattungsvorrichtung 1 einen bündigen Abschluss zu einer Innenraumverkleidung bildet. Die beiden Funktionsprofile der Führungsstrukturen 6 und 7 sind spiegelsymmetrisch, im Übrigen jedoch identisch zueinander gestaltet. In jedem Funktionsprofil ist eine Führungsnut zum linearbeweglichen Verschieben des jeweiligen Gleitkörpers 25 integriert. Jedes Funktionsprofil ist zudem zur Führung und Umlenkung des Seils 15 des jeweiligen Seilzugs vorgesehen. Dabei wird das Seil 15 zunächst an einer der Führungsnut F gegenüberliegenden Außenseite des Funktionsprofils entlanggeführt, anschließend an einem zu der Gehäuseanordnung 5 abliegenden Stirnendbereich des Funktionsprofils über eine Umlenkführung 31 umgelenkt und dann zurück durch die Führungsnut F bis hin zum Gleitkörper 25 verlegt.

Wie anhand der Fig. 4 bis 6 erkennbar ist, erstreckt sich das jeweilige Funktionsprofil der Führungsstruktur 6 oder 7 von der Gehäuseanordnung 5 ausgehend in montiertem Funktionszustand innerhalb des Fahrzeuginnenraums schräg nach oben. Anhand der Fig. 6 ist erkennbar, dass das Seil 15 von der Seiltrommel 14 im Bereich einer Unterseite der Seiltrommel 14 abgezogen und über mehrere Führungselemente 30 längs der Außenseite des Funktionsprofils geführt wird (Fig. 7). Dabei sind mehrere der Führungselemente 30 als Querspannstützen ausgeführt, die auf das Seil 15 eine Querspannung ausüben, um im Betrieb der Beschattungsvorrichtung 1 einen schwingenden Gitarrensaiteneffekt des Seils 15 zu vermeiden. Sowohl die Führungselemente 30 als auch die Führungsnut F sind einstückig an dem aus thermoplastischem Kunststoff vorzugsweise durch ein Spritzgussverfahren hergestellten Funktionsprofil der Führungsstruktur 6, 7 angeformt. Die Führungsnut F ist zu einer Fahrzeugmitte hin bogenartig gekrümmt, um ein Arbeiten des Seils 15 im Funktionsbetrieb zu ermöglichen.

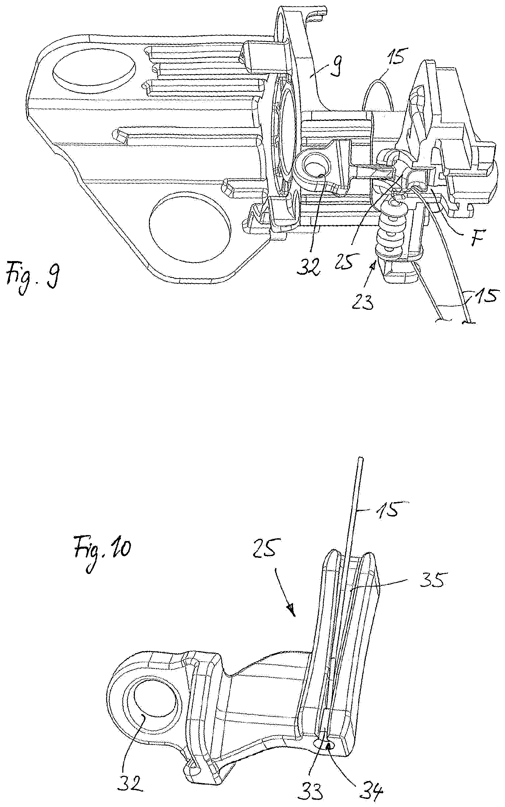

Anhand der Fig. 9 ist erkennbar, dass der Gleitkörper 25 mit seinem quaderartig, längs der Führungsnut F erstreckten Gleitstein linearbeweglich in der Führungsnut F geführt ist. Die Führungsnut F bildet einen Kanal, der den Gleitstein des Gleitkörpers 25 umschließt. Die Führungsnut F ist zur Mitte des Fahrzeuginnenraums und damit zu der Verkleidungsblende 24 hin offen, die ebenfalls komplementär zu der Führungsnut F offen gestaltet ist mittels eines nicht näher bezeichneten Längsschlitzes, der der Führungsnut F nachgeführt ist. Jeder Gleitkörper 25 weist vom Gleitstein aus nach innen zur Mitte des Fahrzeuginnenraums hin abragend einen Quersteg auf, der durch die offene Seite der Führungsnut F und durch den Längsschlitz der Verkleidungsblende 24 hindurch zu einer Mitte des Fahrzeuginnenraums hin nach innen ragt. Der Quersteg ist einstückig an dem Gleitstein angeformt. An dem Quersteg setzt sich nach innen ein Auge 32 einstückig fort, das gegenüber der Ebene des Querstegs und der Gleitebene des Gleitsteins verschränkt ausgeführt ist. Das auch als Aufnahmeauge bezeichnete Auge 32 dient zur Aufnahme des Steckbolzens 27 der Abdeckblende des Auszugprofils 3, um den Gleitkörper 25 in der Aufnahme 28 des Stirnendes des Auszugprofils 3 zu sichern.

Anhand der Fig. 2 sowie anhand der Fig. 3 ist erkennbar, dass das Flächengebilde 2 mit seinem quer erstreckten Keder in der Kedernut des Auszugprofils 3 im Bereich einer Unterseite des Auszugprofils 3 angreift. Dadurch wird zwangsläufig aufgrund einer permanenten leichten Zugbelastung des Flächengebildes 2 auf jeden Gleitkörper 25 ein Kippmoment ausgeübt, das zu einem Verkanten des Gleitsteins des Gleitkörpers 25 in der Führungsnut F führen könnte. Dadurch würde die Gleitreibung des Gleitkörpers 25 innerhalb der Führungsnut F des Funktionsprofils erhöht, wodurch sich zwangsläufig auch eine notwendige Zugkraft des Seils 15 erhöhen würde.

Um dieses Kippmoment ausgleichen zu können, ist ein Seilende 33 des Seils 15 im Bereich einer Unterseite des Gleitsteins in einer Nut 35 entlanggeführt und in einer Aussparung 34 des Gleitsteins formschlüssig gesichert (Fig. 10). Das Seilende 33 des Seils 15 greift damit so exzentrisch zu einer imaginären Kippachse am Gleitkörper 25 an, dass durch die Zugkraft des Seils 15, die über das Seilende 33 in die Aussparung 34 der nach unten offenen Nut 35 des Gleitsteins eingeleitet wird, ein Gegendrehmoment auf den Gleitkörper 25 ausgeübt wird. Durch dieses Gegendrehmoment, das dem Kippmoment entgegenwirkt, das durch die Zugkraft des Flächengebildes 2 auf das Auszugprofil 3 ausgeübt wird, wird der jeweilige Gleitkörper 25 zumindest weitgehend innerhalb der Führungsnut F im Gleichgewicht gehalten, so dass ein Verkanten oder Verkippen des Gleitsteins in der Führungsnut F vermieden werden kann. Hierdurch wird die Gleitreibung zwischen der Führungsnut F und dem Gleitstein des jeweiligen Gleitkörpers 25 innerhalb des Funktionsprofils reduziert, so dass auch das jeweilige Seil 15 eine geringere Zugkraft ausüben muss, um den Gleitstein des jeweiligen Gleitkörpers 25 innerhalb des Funktionsprofils zu verlagern. Die Seitenwandungen der Nut 35 verlaufen nicht parallel zueinander, um dem Seil 15 Raum für Bewegungen zu geben.

Die anhand der Fig. 8 dargestellte Umlenkführung 31 an einem oberen Stirnendbereich des Funktionsprofils der Führungsstruktur 6 ist kreisbogenförmig ausgeführt und als reine Gleitführung gestaltet. Überraschenderweise hat sich bei der Konstruktion herausgestellt, dass eine kreisbogenförmige Gleitführung eine Umlenkung des Seils 15 ähnlich reibungsarm erzielen kann wie eine in diesem Bereich positionierte Seilrolle. Bei einer nicht dargestellten Ausführungsform ist statt der kreisbogenförmigen Gleitführung eine Seilrolle vorgesehen. Die lediglich als Gleitführung gestaltete und mit der Herstellung des Funktionsprofils ausformbare Gleitführung ist gegenüber einer Seilrolle wesentlich kostengünstiger und einfacher herstellbar. Die kreisbogenförmige Umlenkführung 31 weist einen halbkreisförmigen Kreisbogen auf. Beim dargestellten Ausführungsbeispiel gemäß Fig. 8 ist eine in Längsrichtung gesehene Hälfte der kreisbogenförmigen Umlenkführung 31 einstückig am Funktionsprofil der Führungsstruktur 6, 7 angeformt, wohingegen die andere Hälfte, die die zweite Hälfte der rinnenförmigen, kreisbogenförmigen Nut bildet, durch ein separates Bauteil geschaffen ist, das ebenfalls aus Kunststoff hergestellt ist und durch Zusammenstecken oder Verrasten im Bereich der Umlenkführung 31 fixierbar ist.

## Patentansprüche

1. Schutzvorrichtung für einen Fahrzeuginnenraum mit einem flexiblen Flächengebilde (2), das zwischen einer ausgezogenen Schutzposition und einer Ruheposition verlagerbar ist, wobei das Flächengebilde (2) an seinem in Auszugrichtung vorderen Stirnendbereich mit einem formstabilen Auszugprofil (3) verbunden ist, das an seinen gegenüberliegenden Seiten an jeweils einer Führungsstruktur (6, 7), die in betriebsfertigem Zustand fahrzeugfest angeordnet ist, längsverfahrbar gelagert ist, wobei in jeder Führungsstruktur (6, 7) jeweils ein Seilzug (15) verlegt ist, der an jeweils einem in der Führungsstruktur (6, 7) gleitbeweglich gelagerten Gleitkörper (25) angreift, **dadurch gekennzeichnet, dass** der Gleitkörper derart mit dem Auszugprofil (3) verbunden ist, dass ein durch einen Angriffspunkt des Seilzugs (15) am Gleitkörper (25) in das Auszugprofil (3) eingeleitetes Drehmoment und ein durch das Flächengebilde (2) in das Auszugprofil (3) eingeleitetes Gegendrehmoment relativ zu einer quer zur Auszugrichtung verlaufenden Längsachse des Auszugprofils (3) derart gestaltet sind, dass die Gleitkörper (25) und das Auszugprofil (3) bei einer Verlagerungsbewegung im Gleichgewicht gehalten werden.

2. Schutzvorrichtung nach Anspruch 1, **dadurch gekennzeichnet, dass** der Seilzug ein offenes Seil (15) aufweist, das an einem Ende mit dem Gleitkörper (25) und an einem gegenüberliegenden Ende mit einer drehbaren Seiltrommel (14) verbunden ist.

3. Schutzvorrichtung nach Anspruch 1 oder 2, **dadurch gekennzeichnet, dass** jedem Seilzug (14, 15) eine Seillängenkompensationseinheit (16) zugeordnet ist.

4. Schutzvorrichtung nach einem der vorhergehenden Ansprüche, **dadurch gekennzeichnet, dass** jede Führungsstruktur (6, 7) an ihrem von der Seiltrommel (14) abgelegenen Endbereich mit einer Umlenkführung (31) versehen ist, die als kreisbogenförmige Gleitführung für das Seil (15) gestaltet ist.

5. Schutzvorrichtung nach einem der vorhergehenden Ansprüche, **dadurch gekennzeichnet, dass** das Seil (15) längs der Führungsstruktur (6, 7) über mehrere Querspannstützen (30) geführt ist, die eine kombinierte Führung und Querspannung des Seils (15) relativ zu seiner Laufrichtung bewirken.

## Claims

1. Protection device for a vehicle interior compartment, comprising a flexible planar structure (2) which is displaceable between a pulled-out protective position and a rest position, wherein the planar structure (2) is connected to a dimensionally stable pull-out profile (3) on a face end region that is in front in the pull-out direction, which profile is mounted for longitudinal displacement on each of its opposite sides in a respective guiding structure (6, 7) disposed fixed to the vehicle in the ready-for-use condition, wherein a respective cable pull (15) is installed in each guiding structure (6, 7), each cable pull engaging on a respective one of sliding bodies (25) slidingly mounted in the guiding structure (6, 7),
**characterized in that**
the sliding body is connected to the pull-out profile (3) such that a torque introduced into the pull-out profile (3) by a point of application of the cable pull (15) on the sliding body (25) and a counter-torque introduced into the pull-out profile (3) by the planar structure (2) are configured, relative to a longitudinal axis of the pull-out profile (3) extending transversely to the pull-out direction, such that the sliding bodies (25) and the pull-out profile (3) are held in equilibrium during a displacement move.

2. Protection device according to claim 1, **characterized in that** the cable pull includes an open cable (15) which is connected to the sliding body (25) on one end thereof and to a rotatable cable drum (14) on an opposite end thereof.

3. Protection device according to claim 1 or 2, **characterized in that** each cable pull (14, 15) is associated with a cable length compensation unit (16).

4. Protection device according to any of the preceding claims, **characterized in that** each guiding structure (6, 7) is provided, on its end region remote from the cable drum (14), with a deflection guide (31) designed in the form of a circular arc-shaped sliding guide for the cable (15).

5. Protection device according to any of the preceding claims, **characterized in that** the cable (15) is guided along the guiding structure (6, 7) over a plurality of transverse clamp supports (30) which cause combined guiding and transverse clamping of the cable (15) relative to the running direction thereof.

## Revendications

1. Dispositif de protection destiné à l'habitacle d'un véhicule comprenant une structure plane flexible (2) qui est déplaçable entre une position de protection déployée et une position de repos, dans lequel la structure plane (2) sur sa zone d'extrémité frontale dans la direction de tirage est connectée à un profilé de tirage (3) de stabilité dimensionnelle, ledit profilé étant agencé pour déplacement longitudinal sur ses côtés opposés respectivement sur une structure de guidage (6, 7) fixée au véhicule dans une condition prêt à l'emploi, dans lequel un câble de traction (15) respectif est posé dans chaque structure de guidage (6, 7), ledit câble affectant sur un corps coulissant (25) respectif monté de manière coulissante sur la structure de guidage (6, 7),
**caractérisé en ce que**
le corps coulissant est connecté au profilé de tirage (3) de telle manière que un couple introduit dans le profilé de tirage (3) par un point d'application du câble de traction (15) sur le corps coulissant (25) et un contre-couple introduit dans le profilé de tirage (3) par la structure plane (2) sont configurés par rapport à un axe longitudinal du profilé de tirage (3) s'étendant transversalement à la direction de tirage de telle manière que les corps coulissant (25) et le profilé de tirage (3) sont maintenus dans un équilibre pendant un mouvement de déplacement.

2. Dispositif de protection selon la revendication 1, **caractérisé en ce que** le câble de traction comporte un câble (15) ouvert connecté sur l'une extrémité au corps coulissant (25) et sur une extrémité opposée à un enrouleur de câble (14) tournant.

3. Dispositif de protection selon la revendication 1 ou 2, **caractérisé en ce qu'**une unité de compensation de longueur de câble (16) est associée à chacun des câbles de traction (14, 15).

4. Dispositif de protection selon l'une quelconque des revendications précédentes, **caractérisé en ce que** chaque structure de guidage (6, 7) est dotée d'un guidage de déviation (31) sur sa zone d'extrémité éloignée de l'enrouleur de câble (14), ledit guidage de déviation configuré sous forme de guide coulissant en arc de cercle pour le câble (15).

5. Dispositif de protection selon l'une quelconque des revendications précédentes, **caractérisé en ce que** le câble (15) est guidé le long de la structure de guidage (6, 7) à travers plusieurs supports de serrage transversaux (30) réalisant un guidage et serrage transversal combiné du câble (15) par rapport à sa direction de marche.
